# EUROPÄISCHE PATENTSCHRIFT

(11) **EP 2 500 506 B1**
(45) Veröffentlichungstag und Bekanntmachung des Hinweises auf die Patenterteilung: **11.10.2017**
(21) Anmeldenummer: 12157526.0
(22) Anmeldetag: 29.02.2012
(51) Int. Cl.: E06B 9/174, E06B 9/266, E06B 9/50, E06B 9/323, E06B 9/42, F16B 2/12

(54) **Aufsatzeinrichtung für Klemmhalterungen**
Attachment for clamp holders
Dispositif pour supports de serrage

(30) Priorität: 16.03.2011 DE 202011004073 U
(43) Veröffentlichungstag der Anmeldung: 19.09.2012
(73) Patentinhaber: Aerolux GmbH, 22848 Norderstedt (DE)
(72) Erfinder: Enssle, Holm, 22043 Hamburg (DE)
(74) Vertreter: Glawe, Delfs, Moll

(56) Entgegenhaltungen:
- EP-B1- 0 358 742
- DE-U1- 8 705 267

## Beschreibung

Die Erfindung betrifft eine Aufsatzeinrichtung zur Abdichtung einer von einer Klemmhalterung verursachten Öffnung an Dichtprofilen eines Tür- oder Fensterflügels.

Für die Montage von Sonnenschutzvorrichtungen an Türen oder Fenstern, an denen keine Bohrung durchgeführt werden kann, werden Klemmhalterungen verwendet. Dabei umgreift eine Klemmhalterung den Rand des Fenster- oder Türflügels, so dass ein erster Klemmflansch auf dem Dichtprofil und ein zweiter Klemmflansch auf der gegenüberliegenden Seite anliegen. Die Klemmflansche werden durch eine Vorrichtung zusammengepresst. Durch den Druck, den der erste Klemmflansch auf das Dichtprofil ausübt, wird es verformt. In der Umgebung des ersten Klemmflansches wird dadurch die Dichtwirkung des Dichtprofils vermindert.

Im Folgenden werden Fensterflügel und Türflügel zusammenfassend als Flügel bezeichnet und ebenso Fensterrahmen und Türrahmen zusammenfassend als Rahmen.

Klemmhalterungen wie sie z. B. aus EP 0 358 742 B1 bekannt sind, weisen einen Klemmflansch auf, der sich im montierten Zustand zwischen dem Flügel und dem Rahmen befindet. Er drückt das Dichtprofil, das am Flügel angeordnet ist und das im geschlossenen Zustand des Fensters oder der Tür mit dem Rahmen in Kontakt steht, und verformt es unter der Wirkung der Klemmkraft. Durch die Verformung wird im an den Klemmflansch angrenzenden Bereich der Dichtung eine Öffnung zwischen Flügel und Rahmen gebildet. Die so gebildete Öffnung in dem Dichtprofil lässt Luft zwischen Rahmen und Flügel hindurchströmen. In diesem Bereich weist das Dichtprofil demnach keine Dichtungswirkung mehr auf. Eine Temperierung des Innenraums des Gebäudes wird dadurch energie- und kostenintensiver.

Aufgabe der Erfindung ist die Erhöhung der Dichtungswirkung des Dichtprofils bei montierter Klemmhalterung.

Die erfindungsgemäße Lösung liegt in den Merkmalen der unabhängigen Ansprüche. Vorteilhafte Weiterbildungen sind Gegenstand der abhängigen Ansprüche.

Die Lösung umfasst eine Aufsatzeinrichtung zur Abdichtung einer durch eine Klemmhalterung an einem Dichtprofil erzeugten Öffnung, wobei die Aufsatzeinrichtung bandförmig mit einer Flügelseite und einer gegenüberliegenden Rahmenseite ausgestaltet ist. Die Flügelseite umfasst dabei eine Ausnehmung, deren Abmessung so gewählt ist, dass ein Klemmflansch der Klemmhalterung darin aufnehmbar ist, sowie die Ausnehmung an zwei gegenüberliegenden Seiten begrenzende erste und zweite Lippen, die sich zwischen Flügelseite und Rahmenseite zu ihrem der Ausnehmung gegenüberliegenden Ende hin verjüngen.

Die Flügelseite ist diejenige Seite der erfindungsgemäßen Aufsatzeinrichtung, die bei der Montage der Klemmhalterung zum Flügel hin angeordnet wird. Die Rahmenseite der Aufsatzeinrichtung ist auf der gegenüberliegenden Seite angeordnet, die zum Rahmen weist. Die erste und die zweite Lippe sind im montierten Zustand der Aufsatzeinrichtung lateral an dem Klemmflansch angeordnet. Sie verjüngen sich zwischen der Flügel- und der Rahmenseite von der Ausnehmung zum Rand der Aufsatzeinrichtung hin.

Weiter weist die Abmessung der Ausnehmung in ihrer bevorzugten Ausführungsform eine Tiefe auf, die vorzugsweise mindestens das 1,3-fache und weiter vorzugsweise höchstens das 2,5-fache einer Stärke des Klemmflansches aufweist. Relativ zur Stärke der Aufsatzeinrichtung nimmt die Ausnehmung eine Tiefe von etwa zwei Dritteln ein.

Dank der Erfindung können die durch das Eindrücken der Klemmhalterung verursachten Öffnungen in dem Dichtprofil mit der Aufsatzeinrichtung abdichtend gefüllt werden, ohne die Schließbarkeit des Fensters zu beeinträchtigen. Dadurch wird im Vergleich zu der nicht gefüllten Öffnung eine erhöhte Dämmwirkung erreicht. Der Austausch von Raum- mit Außenluft wird durch die Erfindung spürbar vermindert. Die Dämmwirkung ist demnach bei der Nutzung einer Klemmhalterung dieser Art in kalten wie in warmen Regionen der Erde vorteilhaft, da durch sie eine Senkung des Energieverbrauchs der Klimatisierung erreicht wird. Demnach wird in kalten Ländern eine Senkung der Heizkosten und in warmen Ländern eine Senkung der Klimatisierungskosten erreicht.

In einer bevorzugten Ausführungsform ist die Aufsatzeinrichtung aus einem Material ausgeführt, beispielsweise Moosgummi, das gut verfügbar, kostengünstig, extrudierbar und formstabil ist, und zusätzlich elastische Eigenschaften aufweist. Durch die elastischen Eigenschaften erhält die Aufsatzeinrichtung eine gute Langzeitstabilität und wird gegenüber Toleranzen unempfindlich. In Verbindung mit den günstigen Anschaffungskosten des Moosgummis, wird so eine kostengünstige Herstellung ermöglicht.

Dank der Elastizität ergibt sich als besonderer Vorteil eine visuelle Kontrollmöglichkeit der Klemmspannung, wie im Folgenden erläutert wird. Bei der Montage der Klemmhalterung mit der erfindungsgemäßen Aufsatzeinrichtung an einen geöffneten Flügel spreizen sich die Lippen bei ausreichender Klemmspannung von dem Flügel zur Rahmenseite ab. Dieser Zustand erlaubt eine einfache visuelle Kontrolle der Befestigung der Klemmhalterung, da ohne ausreichende Klemmspannung die Klemmhalterung nicht am Flügel befestigt ist und die Abspreizung der Lippen in diesem Fall nicht auftritt. Dadurch wird die Montage vereinfacht und ein sicherer Halt der Klemmhalterung gewährleistet. Dank der Formstabilität des Moosgummis bleibt die Dichtungswirkung über einen langen Zeitraum erhalten. Die Extrudierbarkeit erleichtert die Herstellung der erfindungsgemäßen Ausführungsform und senkt die Bearbeitungskosten.

Vorteilhafterweise ist die Aufsatzeinrichtung aus einem Teil hergestellt.

In einer weiteren vorteilhaften Ausführungsform der Erfindung ist die Ausnehmung schlitzartig von der Lateralseite ausgeführt. Der Klemmflansch wird bei dieser Ausführungsform von mindestens vier Seiten von dem Dichtungsmaterial umschlossen. Der Vorteil liegt hier in der einfachen Montagemöglichkeit der Aufsatzeinrichtung an den Klemmflansch.

Eine weitere vorteilhafte Ausführungsform weist eine rinnenartige Ausnehmung auf. Durch die rinnenartige Form der Ausnehmung bleibt der Klemmflansch nach Montage der Aufsatzeinrichtung in direktem Kontakt mit dem Flügel. Vorteil dieser Ausführungsform ist, dass kein zusätzliches Material in den Klemmweg eingebracht und so ein materialfreier Klemmweg gebildet wird. Dadurch bleibt die Haltefähigkeit der Klemmhalterung gewährleistet. Weiter entsteht an den Kanten des Klemmflansches eine große Kraftkonzentration. Dank des materialfreien Klemmwegs besteht trotz dieser Kraftkonzentration keine die Haltbarkeit der Aufsatzeinrichtung stark verringernde Beschädigungsgefahr. Weiter ist eine Extrusion mit einer einfachen Form möglich, was eine einfache Herstellung ermöglicht.

In einer weiteren vorteilhaften Ausführungsform ist die Aufsatzeinrichtung mehrteilig. Sie umfasst ein langes Band, auf das zwei keilförmige kürzere Bandstücke derart mit Abstand voneinander angeordnet sind, dass sie zwischen sich die Ausnehmung für den Klemmflansch bilden. Die Keilspitzen der beiden Bandstücke sind dabei auf die beiden Endbereiche des langen Bands angeordnet. Sie bilden in dieser Ausführungsform zusammen mit den Endbereichen die Lippen der Aufsatzeinrichtung.

Die Keilform der Lippen ist für alle Ausführungsformen nicht auf die klassische Form eines Keils beschränkt. Sie kann vielmehr auch mit konkaven oder konvexen Flächen ausgeführt sein, um sich besser an die zu dichtende Öffnung anzupassen. Weiter können die Flächen der Lippen profiliert sein, um die Kontaktfläche mit dem Dichtprofil und dem Rahmen zu erhöhen. Die Anordnung der Lippen ist dabei in Bezug auf den Mittelpunkt der Ausnehmung vorzugsweise symmetrisch.

Die Ausnehmung kann in einer Ausführungsform hinterschnitten sein, um eine formschlüssige Verbindung mit dem Klemmflansch herbeizuführen. Alternativ oder zusätzlich kann eine Klebefläche in der Ausnehmung vorgesehen sein.

In der bevorzugten Ausführungsform ist die Rahmenseite der Aufsatzeinrichtung plan ausgeführt, um eine möglichst große geschlossene Kontaktfläche für den Kontakt mit dem Rahmen zu erzielen.

Optional ist die Rahmenseite profiliert ausgeführt, um einen verbesserten Kontakt zum Rahmen zu erreichen. Das Profil kann dabei Noppen oder Lamellen umfassen.

Die Erfindung erstreckt sich ferner auf eine Klemmhalterung mit einer Aufsatzeinrichtung wie vorstehend beschrieben.

Im Folgenden wird die Erfindung unter Bezugnahme auf die Zeichnungen, die vorteilhafte Ausführungsbeispiele zeigen, näher erläutert. Es zeigen:
- Fig. 1: eine einteilige Aufsatzeinrichtung mit rinnenartiger Ausnehmung;
- Fig. 2a,b: ein Beispiel einer Klemmhalterung ohne und mit montierter Aufsatzeinrichtung;
- Fig. 3a,b: an einen offenen Fensterflügel montierte Klemmhalterung ohne und mit Aufsatzeinrichtung;
- Fig. 4: den an einen Fensterrahmen anliegenden Fens-terflügel mit montierte Klemmhalterung mit Aufsatzeinrichtung gemäß Fig. 3b;
- Fig. 5: eine mehrteilige Aufsatzeinrichtung; und
- Fig. 6: eine Aufsatzeinrichtung mit schlitzartiger Ausnehmung an einer Lateralseite.

Ein erstes Ausführungsbeispiel einer Aufsatzeinrichtung 1 ist bandförmig ausgestaltet. Sie weist eine Rahmenseite 2, eine Flügelseite 3, eine Ausnehmung 4 sowie eine erste Lippe 5 und eine zweite Lippe 5' auf.

Die Rahmenseite 2 ist diejenige Seite der Aufsatzeinrichtung 1, die im montierten Zustand bei einem geschlossenen Fensterflügel 22 eine ebene Kontaktfläche mit dem Rahmen bildet. Die Flügelseite 3 ist gegenüber der Rahmenseite angeordnet. Mit Ausnahme der Ausnehmung 4 hat sie im montierten Zustand bei geschlossenem Flügel 22 mit dem Dichtprofil 21 Kontakt.

Die Abmessungen der Ausnehmung 4 sind dabei so gewählt, dass ein erster Klemmflansch 11 einer Klemmhalterung 10 darin aufnehmbar ist. Die Lippen 5 und 5' sind seitlich begrenzend zu der Ausnehmung 4 angeordnet. An ihrem zur Ausnehmung 4 weisenden Rand weisen sie die maximale Stärke zwischen Flügelseite 3 und Rahmenseite 2 auf. Zu einem der Ausnehmung 4 gegenüberliegenden Ende 9, 9' hin verjüngen sich die Lippen 5, 5', so dass sie an diesem Ende 9, 9' eine minimale Stärke zwischen Flügelseite 3 und Rahmenseite 2 aufweisen. Wird der erste Klemmflansch 11 in der Ausnehmung 4 angeordnet, sind die Lippen 5, 5' seitlich an ihm angeordnet. Dabei weist die Abmessung der Ausnehmung 4 bevorzugt eine doppelt so große Tiefe auf, wie es der Stärke K des ersten Klemmflansches 11 entspricht. Die Ausnehmung 4 nimmt relativ zur Stärke S der Aufsatzeinrichtung 1 eine Tiefe von etwa zwei Dritteln ein. Die absoluten Abmessungen hängen von den Abmessungen des ersten Klemmflansches 11 ab, auf dem die Aufsatzeinrichtung 1 angeordnet werden soll. Im vorliegenden Ausführungsbeispiel weist die Aufsatzeinrichtung 1 eine maximale Stärke S von etwa 5 mm, eine Länge L von etwa 40 mm und eine Breite B von etwa 15 mm auf. Die Tiefe der Ausnehmung 4 beträgt etwa 3,5 mm. Deren Breite entspricht dabei der Breite des ersten Klemmflansches 11 von etwa 15 mm. Je nach den Abmessungen des Klemmflansches 11 kann die Aufsatzeinrichtung 1 eine maximale Stärke S zwischen 2 und 8 mm, eine Länge L zwischen 20 und 80 mm und eine Breite B zwischen 10 und 20 mm aufweisen. Die Tiefe der Ausnehmung 4 beträgt etwa 10 bis 80 Prozent relativ zur Stärke S der Aufsatzeinrichtung 1.

Die Aufsatzeinrichtung 1 ist vorzugsweise einteilig und aus einem formstabilen, kostengünstig und gut verfügbaren dämmenden Material ausgeführt. In der bevorzugten Ausführungsform besteht die Aufsatzeinrichtung 1 aus Moosgummi. Dieses Material bietet sich an, da es eine gute Dämmung ermöglicht und gut verarbeitbar ist. Weiter ist es extrudierbar, so dass eine Massenfertigung kostengünstig und unkompliziert durchgeführt werden kann. Moosgummi weist elastische Eigenschaften auf, die ein Anschmiegen der Aufsatzeinrichtung 1 an den Rahmen, das Dichtprofil 21 und den ersten Klemmflansch 11 ermöglichen. Durch das Anschmiegen werden eventuelle Unebenheiten auf den festen Oberflächen der genannten Elemente ausgeglichen.

Die Lippen 5, 5' sind bevorzugt keilförmig ausgestaltet, wobei die Keilspitzen die Kanten der Aufsatzeinrichtung 1 bilden und gegenüberliegend der seitlichen Begrenzung der Ausnehmung an den Enden 9, 9' angeordnet sind.

In einer anderen Ausführungsform ist die Seite der Lippen 5, 5', welche an der Flügelseite 3 angeordnet ist, konvex oder konkav ausgeführt. Weiter sind die Lippen 5, 5' gleich ausgeformt und bevorzugt symmetrisch in Bezug auf die Ausnehmung 4 angeordnet.

Die Rahmenseite 2 als Kontaktfläche zum Rahmen kann in einer besonderen Ausführungsform profiliert sein. Das Profil kann beispielsweise Noppen oder Lamellen umfassen und ermöglicht eine optimale Anpassung der Rahmenseite 2 an eventuelle Unebenheiten des Rahmens.

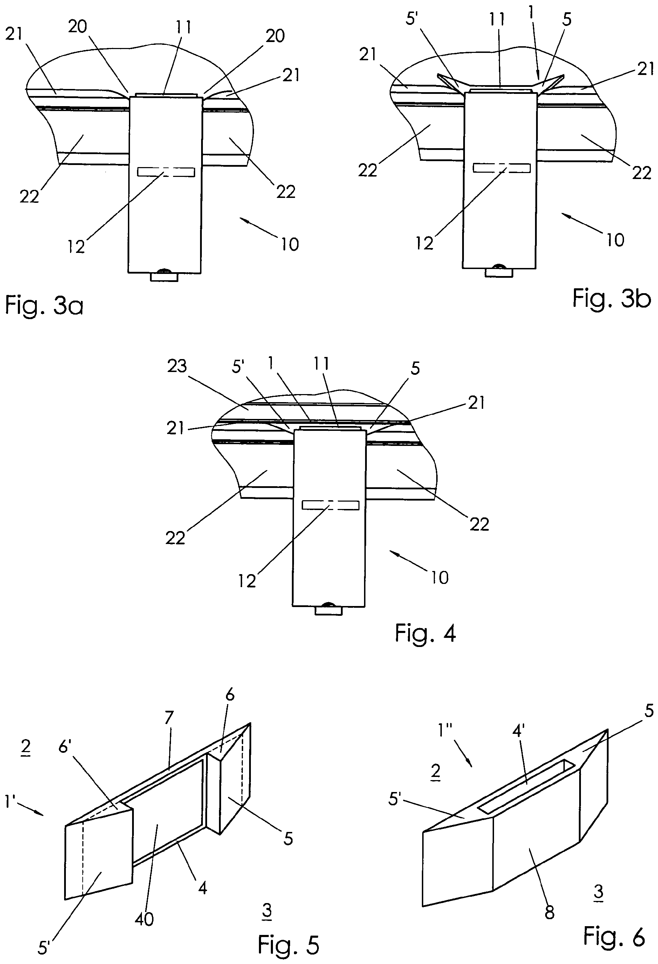

Fig. 3a zeigt eine Aufsicht auf eine Klemmhalterung 10, die an einem Flügel 22 mit dem Dichtprofil 21 montiert ist. Die Klemmhalterung 10 weist den ersten Klemmflansch 11 und einen mit Strichpunkten dargestellten zweiten Klemmflansch 12 auf. Die beiden Klemmflansche 11 und 12 wirken im montierten Zustand der Klemmhalterung 10 durch eine Spanneinrichtung 13 schraubstockartig zusammen, so dass die Klemmhalterung 10 an dem Flügel 22 festgehalten ist. Dabei wird das Dichtprofil 21 durch den ersten Klemmflansch 11 verformt. Die gestrichelt gezeichnete Linie in Fig. 3a zeigt den Verlauf des Dichtprofils 21 ohne Einwirkung des ersten Klemmflansches 11. Durch die Verformung entsteht eine Öffnung 20. Im geschlossenen Zustand des Flügels 22 weist das Dichtprofil 21 an der Stelle, an der sich die Öffnung 20 befindet, keine Dichtwirkung mehr auf. Durch die Öffnung 20 kann Luft durchströmen, was zu einem unkontrollierten Austausch zwischen der Raumluft und der Außenluft führt. Durch die Montage der Aufsatzeinrichtung 1 an den ersten Klemmflansch 11 wird der Austausch zwischen Raum- und Außenluft durch die Öffnungen 20 in dem Dichtprofil 21 des Fensterflügels 22, die durch den Druck des ersten Klemmflansches 11 erzeugt wurden, spürbar vermindert.

Ist die Aufsatzeinrichtung 1 an der Klemmhalterung 10 angebracht und diese an einem Flügel 22 montiert, so sind bei geöffnetem Flügel 22 die Lippen 5, 5' in der in Fig. 3b dargestellten Art abgespreizt. Um diesen Zustand zu erzielen, muss der erste Klemmflansch einen genügend großen Druck auf den Flügel 22 und das Dichtprofil 21 ausüben. Dieser Druck wird nur dann ausgeübt, wenn die Klemmhalterung 10 sicher am Flügel 22 montiert ist und eine genügend hohe Klemmenspannung zwischen dem ersten und zweiten Klemmflansch 11, 12 aufweist. Der abgespreizte Zustand der Lippen 5, 5' kann dementsprechend als optische Anzeige für den Montagezustand der Klemmhalterung 10 verwendet werden.

Ist das Fenster geschlossen, sind die Lippen 5, 5' entsprechend der in Fig. 4 gezeigten Stellungen angelegt. Die Begrenzungen der Lippen 5, 5' sind seitlich an den ersten Klemmflansch 11 angelegt. Sie füllen in dieser Stellung die Öffnung 20 aus, so dass die Dämmwirkung an dieser Stelle erhöht wird.

In Fig. 5 ist eine Aufsatzeinrichtung 1' in einer weiteren Ausführungsform mehrteilig ausgeführt. Dabei weist die Aufsatzeinrichtung 1' ein Band 7 sowie einen ersten Keil 6 und einen zweiten Keil 6' auf. Die Schneiden der Keile 6, 6' sind an den Enden des Bands angeordnet. Dadurch bilden die stumpfen Seiten der Keile 6, 6' Begrenzungen der Ausnehmung 4. Die Keile 6, 6' können durch Klebung auf dem Band 7 angebracht werden.

In einer anderen Ausführungsform weist eine Aufsatzeinrichtung 1" eine schlitzförmige Ausnehmung 4' an einer der Lateralseiten der Aufsatzeinrichtung 1" auf, wie in Fig. 6 dargestellt. Zur Montage wird der erste Klemmflansch 11 in die schlitzförmige Ausnehmung 4' eingesteckt. Dabei ist zwischen dem ersten Klemmflansch 11 und dem zweiten Klemmflansch 12 ein Steg 8 aus Dichtmaterial angeordnet.

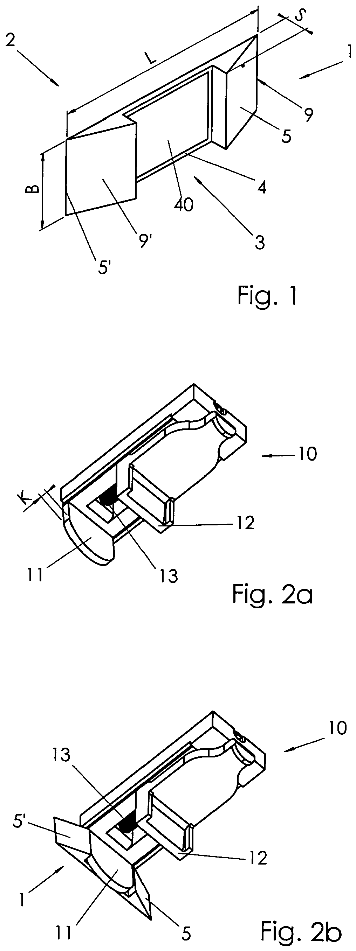

In einer anderen, bevorzugten Ausführungsform nach Fig. 1 ist die Ausnehmung 4 rinnenartig ausgestaltet, so dass im am ersten Klemmflansch 11 montierten Zustand kein Material zwischen dem ersten Klemmflansch 11 und dem zweiten Klemmflansch 12 angeordnet ist. Dadurch ist auch bei der Montage am Flügel 22 kein Material zwischen dem ersten Klemmflansch 11 und dem Dichtprofil 21 angeordnet, so dass die Haltewirkung der Klemmhalterung 10 nicht durch die Aufsatzeinrichtung 1 beeinflusst wird. Die Ausnehmung 4 weist weiter eine Klebefläche 40 auf, die eine einfache Befestigung an dem ersten Klemmflansch 11 ermöglicht. Bei einer Extrusion wird nur eine einfache Form benötigt, so dass der Herstellungsprozess kostengünstig durchgeführt werden kann.

## Patentansprüche

1. Aufsatzeinrichtung zur Abdichtung einer durch einen ersten Klemmflansch (11) einer Klemmhalterung (10) für Sonnenschutzvorrichtungen an einem Dichtprofil (21) eines Tür- oder Fensterflügels erzeugten Öffnung (20) zwischen dem Rahmen und Flügel, **dadurch gekennzeichnet, dass**
die Aufsatzeinrichtung (1) bandförmig mit einer Flügelseite (3) und einer gegenüberliegenden Rahmenseite (2) ausgestaltet ist, wobei die Flügelseite (3) eine Ausnehmung (4), deren Abmessung so gewählt ist, dass der erste Klemmflansch (11) der Klemmhalterung (10) darin aufnehmbar ist, sowie die Ausnehmung (4) an zwei gegenüberliegenden Seiten begrenzende erste und zweite Lippen (5, 5') umfasst, die sich zwischen Flügelseite (3) und Rahmenseite (2) zu ihrem der Ausnehmung (4) gegenüberliegenden Ende hin verjüngen.

2. Aufsatzeinrichtung nach Anspruch 1,
**dadurch gekennzeichnet, dass**
die Aufsatzeinrichtung (1) einteilig ausgeführt ist.

3. Aufsatzeinrichtung nach den Ansprüchen 1 oder 2,
**dadurch gekennzeichnet, dass**
die Ausnehmung (4) rinnenartig ausgeführt ist.

4. Aufsatzeinrichtung nach Anspruch 3,
**dadurch gekennzeichnet, dass**
die Ausnehmung (4) einen Hinterschnitt aufweist.

5. Aufsatzeinrichtung nach den Ansprüchen 1 bis 4,
**dadurch gekennzeichnet, dass**
die Ausnehmung (4) eine Klebefläche (40) aufweist.

6. Aufsatzeinrichtung nach den Ansprüchen 1 oder 2, **dadurch gekennzeichnet, dass**
die Ausnehmung (4) schlitzartig ausgeführt ist, wobei sie auf der Flügelseite (3) durch einen Steg (8) bedeckt ist.

7. Aufsatzeinrichtung nach den Ansprüchen 1 bis 6,
**dadurch gekennzeichnet, dass**
die Lippen (5, 5') keilförmig ausgeführt sind und symmetrisch zur Ausnehmung (4) angeordnet sind.

8. Aufsatzeinrichtung nach den Ansprüchen 1 bis 7,
**dadurch gekennzeichnet, dass**
die Lippen (5, 5') an der Flügelseite (3) eine konkave oder konvexe Oberfläche aufweisen.

9. Aufsatzeinrichtung nach den Ansprüchen 1 bis 8,
**dadurch gekennzeichnet, dass**
die Lippen (5, 5') zur Rahmenseite (2) abgespreizt sind, wenn die Aufsatzeinrichtung (1) an der an einem offenen Flügel (22) montierten Klemmhalterung (10) angebracht ist.

10. Aufsatzeinrichtung nach Anspruch 1 bis 9,
**dadurch gekennzeichnet, dass**
die Rahmenseite (2) eben ausgeführt ist.

11. Aufsatzeinrichtung nach den Ansprüchen 1 bis 10,
**dadurch gekennzeichnet, dass**
die Aufsatzeinrichtung (1) aus einem extrudierbaren und/oder elastischen Material besteht.

12. Aufsatzeinrichtung nach Anspruch 11,
**dadurch gekennzeichnet, dass**
das Material Moosgummi ist.

13. Aufsatzeinrichtung nach den Ansprüchen 1 bis 12,
**dadurch gekennzeichnet, dass**
die Aufsatzeinrichtung (1) eine Stärke (S) zwischen 2 und 8 mm, eine Breite (B) zwischen 10 und 20 mm und eine Länge (L) zwischen 20 und 60 mm aufweist, und/oder die Ausnehmung (4) eine Tiefe zwischen 10 und 80 Prozent der Stärke (S) aufweist.

14. Klemmhalterung für ein Trägerelement an einem Flügel eines Fenster, einer Tür oder dergleichen, die jeweils zwei mittels einer Spanneinrichtung (13) zusammenziehbare Klemmflansche (11, 12) aufweist,
**dadurch gekennzeichnet, dass**
sie weiter eine Aufsatzeinrichtung (1) nach einem der Ansprüche 1 bis 13 an einem ersten der Klemmflansche (11) aufweist.

## Claims

1. Attachment device for sealing an opening (20) between the frame and a door leaf or window sash that is produced by a first clamping flange (11) of a clamping holder (10) for sun-shielding devices on a sealing profile (21) of the door leaf or window sash,
**characterized in that**
the attachment device (1) is of strip-shaped design with a leaf/sash side (3) and an opposite frame side (2), wherein the leaf/sash side (3) comprises a cutout (4) whose dimension is chosen such that the first clamping flange (11) of the clamping holder (10) can be received therein, and first and second lips (5, 5') which delimit the cutout (4) on two opposite sides and which taper between the leaf/sash side (3) and frame side (2) towards their end opposite the cutout (4).

2. Attachment device according to Claim 1,
**characterized in that**
the attachment device (1) is of one-part design.

3. Attachment device according to either of Claims 1 and 2,
**characterized in that**
the cutout (4) is of channel-like design.

4. Attachment device according to Claim 3,
**characterized in that**
the cutout (4) has an undercut.

5. Attachment device according to Claims 1 to 4,
**characterized in that**
the cutout (4) has an adhesive surface (40).

6. Attachment device according to either of Claims 1 and 2,
**characterized in that**
the cutout (4) is of slot-like design, it being covered on the leaf/sash side (3) by a web (8).

7. Attachment device according to Claims 1 to 6,
**characterized in that**
the lips (5, 5') are of wedge-shaped design and are arranged symmetrically to the cutout (4).

8. Attachment device according to Claims 1 to 7,
**characterized in that**
the lips (5, 5') have a concave or convex surface on the leaf/sash side (3).

9. Attachment device according to Claims 1 to 8,
**characterized in that**
the lips (5, 5') are splayed towards the frame side (2) when the attachment device (1) is attached to the clamping holder (10) mounted on an open leaf/sash (22).

10. Attachment device according to Claims 1 to 9,
**characterized in that**
the frame side (2) is of planar design.

11. Attachment device according to Claims 1 to 10,
**characterized in that**
the attachment device (1) consists of an extrudable and/or elastic material.

12. Attachment device according to Claim 11,
**characterized in that**
the material is foam rubber.

13. Attachment device according to Claims 1 to 12,
**characterized in that**
the attachment device (1) has a thickness (S) between 2 and 8 mm, a width (B) between 10 and 20 mm and a length (L) between 20 and 60 mm, and/or the cutout (4) has a depth between 10 and 80 per cent of the thickness (S).

14. Clamping holder for a support element on a sash of a window, a leaf of a door or the like, which in each case has two clamping flanges (11, 12) which can be drawn together by means of a tensioning device (13),
**characterized in that**
it further has an attachment device (1) according to one of Claims 1 to 13 on a first of the clamping flanges (11).

## Revendications

1. Dispositif rapporté pour l'étanchéité d'une ouverture (20) produite entre le cadre et le battant par une première bride de serrage (11) d'un support de serrage (10) pour des dispositifs de pare-soleil au niveau d'un profilé d'étanchéité (21) d'un battant de porte ou de fenêtre,
**caractérisé en ce que**
le dispositif rapporté (1) est configuré sous forme de bande avec un côté de battant (3) et un côté de cadre (2) opposé, le côté de battant (3) comprenant un évidement (4) dont les dimensions sont choisies de telle sorte que la première bride de serrage (11) du support de serrage (10) puisse être reçue dans celui-ci, et l'évidement (4) comprenant des première et deuxième lèvres de limitation (5, 5') au niveau de deux côtés opposés, lesquelles lèvres se rétrécissent entre le côté de battant (3) et le côté de cadre (2) jusqu'à leur extrémité opposée à l'évidement (4).

2. Dispositif rapporté selon la revendication 1,
**caractérisé en ce que**
le dispositif rapporté (1) est réalisé d'une seule pièce.

3. Dispositif rapporté selon la revendication 1 ou 2,
**caractérisé en ce que**
l'évidement (4) est réalisé sous forme de cannelure.

4. Dispositif rapporté selon la revendication 3,
**caractérisé en ce que**
l'évidement (4) présente une contre-dépouille.

5. Dispositif rapporté selon les revendications 1 à 4,
**caractérisé en ce que**
l'évidement (4) présente une surface adhésive (40).

6. Dispositif rapporté selon les revendications 1 ou 2,
**caractérisé en ce que**
l'évidement (4) est réalisé en forme de fente, et est re-couvert du côté du battant (3) par une nervure (8).

7. Dispositif rapporté selon les revendications 1 à 6,
**caractérisé en ce que**
les lèvres (5, 5') sont réalisées en forme de cale et sont disposées symétriquement par rapport à l'évidement (4).

8. Dispositif rapporté selon les revendications 1 à 7,
**caractérisé en ce que**
les lèvres (5, 5') présentent au niveau du côté de battant (3) une surface concave ou convexe.

9. Dispositif rapporté selon les revendications 1 à 8,
**caractérisé en ce que**
les lèvres (5, 5') sont écartées vers le côté de du cadre (2), lorsque le dispositif rapporté (1) est monté au niveau du support de serrage (10) monté sur un battant ouvert (22).

10. Dispositif rapporté selon les revendications 1 à 9, **caractérisé en ce que** le côté de cadre (2) est réalisé sous forme plane.

11. Dispositif rapporté selon les revendications 1 à 10,
**caractérisé en ce que**
le dispositif rapporté (1) se compose d'un matériau extrudable et/ou élastique.

12. Dispositif rapporté selon la revendication 11,
**caractérisé en ce que**
le matériau est du caoutchouc-mousse.

13. Dispositif rapporté selon les revendications 1 à 12,
**caractérisé en ce que**
le dispositif rapporté (1) présente une épaisseur (S) comprise entre 2 et 8 millimètres, une largeur (B) comprise entre 10 et 20 mm et une longueur (L) comprise entre 20 et 60 mm,
et/ou l'évidement (4) présente une profondeur comprise entre 10 et 80 pour cent de l'épaisseur (S).

14. Support de serrage pour un élément de support sur un battant de fenêtre, de porte ou similaire, qui présente à chaque fois deux brides de serrage (11, 12) pouvant être réunies au moyen d'un dispositif de serrage (13),
**caractérisé en ce**
**qu'**il présente en outre un dispositif rapporté (1) selon l'une quelconque des revendications 1 à 13 au niveau d'une première des brides de serrage (11).
